# EUROPÄISCHE PATENTSCHRIFT

(11) **EP 4 396 533 B1**
(45) Veröffentlichungstag und Bekanntmachung des Hinweises auf die Patenterteilung: **07.10.2026**
(21) Anmeldenummer: 22764733.6
(22) Anmeldetag: 11.08.2022
(51) Int. Cl.: G01C 21/30, B60W 30/06, G06V 20/58

(54) **VERFAHREN UND ASSISTENZEINRICHTUNG ZUM UNTERSTÜTZEN VON FAHRZEUGFUNKTIONEN IN EINEM PARKRAUM UND KRAFTFAHRZEUG**
METHOD AND ASSISTANCE DEVICE FOR SUPPORTING VEHICLE FUNCTIONS IN A PARKING LOT, AND MOTOR VEHICLE
PROCÉDÉ ET DISPOSITIF D'ASSISTANCE POUR SOUTIEN DES FONCTIONS D'UN VÉHICULE DANS UN PARC DE STATIONNEMENT, ET VÉHICULE AUTOMOBILE

(30) Priorität: 31.08.2021 DE 102021209575
(43) Veröffentlichungstag der Anmeldung: 10.07.2024
(73) Patentinhaber: VOLKSWAGEN AKTIENGESELLSCHAFT, 38440 Wolfsburg (DE)
(72) Erfinder: WAPPLER, Stefan, 38387 Söllingen (DE); IKEN, Timo, 38440 Wolfsburg (DE); KOCH, Niklas, 38479 Tappenbeck (DE); KUBE, Roland, 38179 Schwülper (DE)
(86) Internationale Anmeldenummer: PCT/EP2022/072597
(87) Internationale Veröffentlichungsnummer: WO 2023/030858

(56) Entgegenhaltungen:
- EP-A1- 3 330 946
- WO-A1-2021/161614
- CN-A- 112 966 622
- DE-A1- 102017 201 664
- DE-A1- 102018 213 007
- DE-A1- 102020 210 421
- DE-A1- 102021 003 567
- KR-A- 20180 052 028
- US-A1- 2011 044 543
- US-A1- 2016 187 144
- US-A1- 2018 336 421
- US-A1- 2020 160 151

## Beschreibung

Ein Ansatz zur Realisierung einer Automatisierung von Fahrfunktionen besteht in der Bereitstellung und Nutzung digitaler Karten, beispielsweise als Grundlage für eine Lokalisierung, eine Bahnplanung, ein Auffinden von Interessenpunkten und/oder dergleichen mehr. Entsprechend detaillierte und zuverlässige Karten sind bisher jedoch nicht verbreitet verfügbar. Zudem stellt es eine Herausforderung dar, derartige Karten aktuell zu halten.

Ein Verfahren zur Aktualisierung und/oder Erweiterung eines Kartendatensatzes ein ist in der DE 10 2014 015 073 A1 beschrieben. Dort wird ein aktueller Kartendatensatz an eine mobile Einrichtung übermittelt und darin zur Lokalisierung der mobilen Einrichtung in einer jeweiligen Umgebung verwendet. Es werden dann eine noch nicht oder unterschiedlich in dem Kartendatensatz enthaltene Eigenschaft eines Merkmals in der Umgebung beschreibende Merkmalsdaten aus Sensordaten von Umgebungssensoren der mobilen Einrichtung ermittelt. Diese werden in einer in der mobilen Einrichtung gespeicherten Kopie des Kartendatensatzes abgespeichert. Danach wird der derart erweiterte Kartendatensatz an eine zentrale, der Umgebung zugeordnete Servereinrichtung übermittelt und dort unter Berücksichtigung der neuen und/oder geänderten Eigenschaften mit anderen entsprechenden erweiterten Kartendatensätzen zu einem aktualisierten Kartendatensatz fusioniert. Damit soll eine Möglichkeit zur Ermittlung hochexakter, die Umgebung hinsichtlich möglichst vieler Eigenschaften beschreibender Kartendatensätze zur Navigation angegeben werden.

Eine digitale Karte kann zur Lokalisierung eines höher automatisierten Fahrzeugs genutzt werden. Ein entsprechendes Verfahren ist in der DE 10 2017 201 664 A1 beschrieben. Darin werden sensorisch erfasste Merkmale semistatischer Objekte in einer Umgebung des Fahrzeugs in ein lokales Umfeldmodell überführt, das zumindest ausgewählte Merkmale in Form von erweiterten Landmarken enthält. Weiter wird dann das lokale Umfeldmodell an das Fahrzeug in Form einer digitalen Karte übermittelt und das Fahrzeug unter Verwendung der digitalen Karte lokalisiert.

Für das Erstellen einer Karte kann eine zuverlässige Erkennung von Objekten nützlich sein. Ein entsprechendes Verfahren beschreibt beispielsweise die DE 10 2009 016 562 A1. Darin werden mittels einer Kamera eines Fahrzeugs an einer ersten Fahrzeugposition und an einer zweiten Fahrzeugposition Bilder eines Umfelds erfasst. Aus diesen Bildern wird eine Positionsänderung des Fahrzeugs zwischen der ersten und der zweiten Fahrzeugposition ermittelt. Darauf basierend wird dann eine dreidimensionale Umfeldkarte des erfassten Umfelds mit einem Höhenprofil erzeugt.

Die US 2020 / 0 208 994 A1 befasst sich mit der Verifizierung und Aktualisierung von Kartendaten mittels eines elektronischen Geräts. Dort werden durch das elektronische Gerät eine Kartierungsanfrage von einem globalen Kartenserver für ein Gebiet empfangen und mittels eines Sensors des elektronischen Geräts mit diesem Gebiet assoziierte lokale Daten aufgenommen. Diese lokalen Daten werden dann an den globalen Kartenserver gesendet. Es werden dann durch das elektronische Gerät globale Kartendaten von dem globalen Kartenserver empfangen. Diese globalen Kartendaten sind dabei basiert auf den gesendeten lokalen Daten und weiteren lokalen Daten, die ebenfalls mit dem Gebiet assoziiert sind und durch ein anderes elektronisches Gerät bereitgestellt wurden.

Ein Verfahren zum Generieren von Karten ist beispielsweise in der US 2020 / 0 109 954 A1 beschrieben. In dem dort beschriebenen Verfahren werden von mehreren Fahrzeugen stammende Daten bezüglich einer Umgebung, in der die Fahrzeuge operieren, empfangen. Diese Daten werden dabei mittels bordeigener Sensoren der Fahrzeuge gesammelt. Mithilfe eines Prozessors wird dann unter Verwendung der Daten der mehreren Fahrzeuge eine dreidimensionale Karte generiert.

In der US 2020 / 0 309 541 A1 ist ein System zum Trainieren von SLAM-Modellen (SLAM: Simultaneous Localization And Mapping) beschrieben. Ein solches System umfasst eine in einem Fahrzeug montierte Kamera, die über eine Mobilfunkverbindung in Kommunikation mit einem Bildserver steht. Mittels der Kamera werden Bilder, die mit einer Position und einem Zeitstempel versehen sind, zu dem Bildserver hochgeladen. Das System umfasst weiter ein Speichergerät, das geographische Karten und Bilder speichert und die Bilder geographisch mit Referenz zu den geographischen Karten indexiert. Weiter umfasst das System einen Bilderserver, der hochgeladene Bilder empfängt, diese mit einer geographischen Position und einem Zeitstempel versieht und auf dem Speichergerät speichert. Das System umfasst auch einen Trainingsserver, der ein SLAM-Modell unter Verwendung der mit der geographischen Position und dem Zeitstempel versehenen Bilder trainiert. Dabei empfängt das SLAM-Modell ein Bild als Input und sagt die Bildposition als Output vorher. Alternativ empfängt das SLAM-Modell als Input ein Bild, das einen Fehler aufweist, und sagt als Output eine lokale Korrektur für das Bild vorher.

Aufgabe der vorliegenden Erfindung ist es, eine effiziente und effektive Unterstützung zumindest teilautomatisierter Fahrzeug- oder Fahrfunktionen zu ermöglichen.

Diese Aufgabe wird erfindungsgemäß durch die Gegenstände der unabhängigen Patentansprüche gelöst. Mögliche Ausgestaltungen und Weiterbildungen der vorliegenden Erfindung sind in den abhängigen Patentansprüchen, in der Beschreibung und in der Figur offenbart.

Ein erfindungsgemäßes Verfahren dient zum Unterstützen einer Umsetzung zumindest teilautomatisierten Fahr - oder Fahrzeugfunktion eines Kraftfahrzeugs in einem Parkraum. Ein Parkraum im Sinne der vorliegenden Erfindung kann ein öffentlicher oder privater Parkplatz, ein Parkstreifen oder dergleichen, also allgemein eine Fläche mit einem oder mehreren Bereichen zum Abstellen eines oder mehrerer Kraftfahrzeuge sein. Der Parkraum kann dabei auch Begrenzungen, Leitelemente, Ausstattungs- oder Infrastrukturelemente und/oder dergleichen mehr umfassen. Der Parkraum kann sich auf einer oder mehreren Ebenen erstrecken, einen Außenbereich oder ein Innenbereich, beispielsweise eines Parkhauses, umfassen und/oder dergleichen mehr.

Das erfindungsgemäße Verfahren umfasst mehrere Verfahrensschritte, die insbesondere automatisch ausgeführt werden können. Die Verfahrensschritte können wiederholt, insbesondere kontinuierlich oder regelmäßig wiederholt oder durchlaufen werden.

In einem Verfahrensschritt des erfindungsgemäßen Verfahrens werden in dem Parkraum mittels einer Umgebungssensorik eines Kraftfahrzeugs Umgebungsdaten, die eine jeweils aktuelle Umgebung des Kraftfahrzeugs, hier also insbesondere den Parkraum, abbilden oder charakterisieren, aufgenommen. Die Umgebungssensorik kann beispielsweise eine Kamera, eine Lidareinrichtung, eine Radareinrichtung, eine Ultraschallsensorik und/oder dergleichen mehr sein oder umfassen. Dementsprechend können die Umgebungsdaten die Umgebung bzw. den Parkraum abbilden oder beispielsweise durch eine Punktwolke repräsentieren oder dergleichen. Die Umgebungsdaten können also ein Kamerabild, einen Lidardatensatz, einen Radardatensatz, einen Ultraschalldatensatz und/oder dergleichen mehr umfassen.

In einem weiteren Verfahrensschritt des erfindungsgemäßen Verfahrens werden die Umgebungsdaten mittels einer entsprechenden Datenverarbeitungs- oder Assistenzeinrichtung des Kraftfahrzeugs zum Erkennen semantischer und/oder geometrischer Objekte verarbeitet. Die Umgebungsdaten werden hier also semantisch und/oder geometrisch klassifiziert, beispielsweise indem ein entsprechender Algorithmus zur Objekt- oder Formenerkennung und/oder zur semantischen Segmentierung oder dergleichen auf die Umgebungsdaten angewendet wird. Es können hier also entsprechende Merkmale (Features), die die Objekte beschreiben oder charakterisieren oder den Objekten entsprechen, aus den Umgebungsdaten extrahiert werden. Diese Merkmale können dann in weiteren Verfahrens- oder Verarbeitungsschritten verwendet werden, beispielsweise anstelle der vollständigen Umgebungsdaten, um Datenverarbeitungsaufwand einzusparen.

In einem weiteren Verfahrensschritt des erfindungsgemäßen Verfahrens werden aus den Umgebungsdaten mittels der Datenverarbeitungs- oder Assistenzeinrichtung des Kraftfahrzeugs Datenteile extrahiert, die mit als relevant für ein Parkmanöver eingestuften semantischen und/oder geometrischen Objekten korrespondieren. Eine solche Einstufung kann beispielsweise durch das Kraftfahrzeug bzw. die Datenverarbeitungs- oder Assistenzeinrichtung automatisch durchgeführt werden. Ebenso kann die Einstufung, beispielsweise in Form einer entsprechenden Tabelle oder Liste von relevanten Objekten oder Objektarten, vorgegeben sein. Eine solche vorgegebene Einstufung kann dann beispielsweise in einem Datenspeicher der Datenverarbeitungs- oder Assistenzeinrichtung hinterlegt sein. Ein Parkmanöver im vorliegenden Sinne kann ein, insbesondere automatisiertes, Manöver des Kraftfahrzeugs zum Navigieren oder für eine Fortbewegung in dem Parkraum, beispielsweise ein Einfahren, ein Ausfahren, ein Einparken, ein Ausparken und/oder dergleichen mehr, sein oder umfassen. Das Parkmanöver kann ebenso ein Rangiermanöver des Kraftfahrzeugs in dem Parkraum sein oder umfassen. Die Datenteile sind oder umfassen Bild- oder Datenpunkte, welche die erkannten relevanten semantischen und/oder geometrischen Objekte abbilden, darstellen oder charakterisieren.

Für ein Parkmanöver im vorliegenden Sinne relevante semantische Objekte können Umgebungsobjekte sein, die semantisch, also hinsichtlich ihrer Art, ihres Typs oder ihrer Bedeutung, eingestuft oder klassifiziert sind und für eine erfolgreiche Ausführung des Parkmanövers zu berücksichtigen oder von Interesse sind oder sein können. In einer möglichen Ausgestaltung der vorliegenden Erfindung sind als solche relevanten semantischen Objekte insbesondere Parkflächenmarkierungen oder -begrenzungen, Fahrwegbegrenzungen und/oder Lokalisierungsmarker vorgegeben. Lokalisierungsmarker im vorliegenden Sinne können Objekte oder Markierungen sein, die eine zumindest relative Positionsbestimmung erlauben. Solche Lokalisierungsmarker können beispielsweise eine Form aufweisen und/oder mit einem Muster oder einer Markierung versehen sein, die blickwinkelunabhängig eine Bestimmung der Pose des Lokalisierungsmarkers und somit auch eine Bestimmung einer Pose des aufnehmenden Kraftfahrzeugs ermöglicht, in einer vorgegebenen festen Formation zueinander, die eine Positionsbestimmung erlaubt, angeordnet sein, ein Referenzsignal zur Positionsbestimmung ausgeben und/oder dergleichen mehr.

Für ein Parkmanöver im vorliegenden Sinne relevante geometrische Objekte können in den Umgebungsdaten enthaltene oder abgebildete geometrische Merkmale, Formen, Strukturen oder Muster sein oder umfassen, die jeweils ein bestimmtes Umgebungsobjekt oder einen Verbund oder eine Gruppe von Umgebungsobjekten repräsentieren können. Dies können beispielsweise Linien, Punkte, Rechtecke, die gegebenenfalls perspektivisch verzerrt sein können, Zylinder, sowie Gruppierungen oder relative Anordnungen davon sein. Die geometrischen Objekte können semantisch identifiziert sein oder semantisch unspezifiziert oder unerkannt sein oder bleiben. Letzteres kann etwa der Fall sein, wenn eine semantische Objekterkennung ein entsprechendes Objekt nicht semantisch klassifizieren, also erkennen kann und/oder wenn eine semantische Klassifizierung nicht notwendig ist, beispielsweise weil bestimmte geometrische Objekte oder Strukturen unabhängig von Ihrer semantischen Art oder Bedeutung stets als relevant für ein Parkmanöver eingestuft werden und/oder ein erkanntes geometrisches Objekt bereits allein aufgrund seiner Position - etwa relativ zu einer Parkfläche oder einem Fahrweg - als relevant für ein Parkmanöver gilt. In letzterem Fall kann ein solches geometrisches Objekt beispielsweise allgemein als Hindernis eingestuft werden, ohne dass es exakt semantisch identifiziert werden müsste.

Die semantischen und/oder geometrischen Objekte können als 2D-Objekte erkannt, also etwa durch Ihre 2D-Lage und/oder 2D-Orientierung in einem 2D-Umgebungsdatensatz beschrieben werden. Ebenso können die Objekte als 3D-Objekte oder in eine 3D-Umgebung eingebettete 2D-Objekte oder 2D-Flächen erkannt und entsprechend etwa durch Ihre 3D-Lage und/oder 3D-Orientierung in einem 3D-Umgebungsdatensatz beschrieben werden.

Die semantischen und/oder geometrischen Objekte bzw. deren Erkennung können besonders einfach und zuverlässig eine erfolgreiche Ausführung unterschiedlicher Parkmanöver in dem jeweiligen Parkraum ermöglichen.

In einem weiteren Verfahrensschritt des erfindungsgemäßen Verfahrens werden nicht die gesamten aufgenommenen Umgebungsdaten, sondern von diesen nur die extrahierten Datenteile zusammen mit Objektdaten, die als semantische und/oder geometrische Attributierung der Datenteile jeweils angeben, mit welchem semantischen und/oder geometrischen Objekt oder mit welchen semantischen und/oder geometrischen Objekten die Datenteile korrespondieren, zum automatischen Erstellen einer Gesamtkarte an eine Servereinrichtung gesendet. Es kann also, insbesondere fahrzeugseitig, eine semantische und/oder geometrische Attributierung der Datenteile durchgeführt werden. Durch Auswertung dieser semantischen und/oder geometrischen Attributierung können dann von der Servereinrichtung entsprechende relevante Objekte identifiziert und gebildet, also in die Gesamtkarte eingetragen werden. Bei der Servereinrichtung kann es sich beispielsweise um ein sogenanntes Backend, einen Cloudserver, ein Rechenzentrum oder dergleichen handeln. Die Datenteile und die Objektdaten können beispielsweise mittels eines entsprechenden Kommunikationsmoduls der Assistenzeinrichtung oder des Kraftfahrzeugs, insbesondere über eine kabel- oder leitungslose Datenverbindung, beispielsweise eine Mobilfunk- oder WLAN-Verbindung oder dergleichen, an die Servereinrichtung gesendet werden.

Das beschriebene Verarbeiten oder auch das Extrahieren der Datenteile sowie gegebenenfalls das Kombinieren oder Zuordnen der Datenteile mit oder zu den Objektdaten kann insbesondere fahrzeugseitig, also etwa durch die genannte Datenverarbeitungs- oder Assistenzeinrichtung des Kraftfahrzeugs, durchgeführt werden. Dadurch kann ein von dem Kraftfahrzeug aus an die Servereinrichtung zusendendes Datenvolumen signifikant reduziert werden, beispielsweise im Vergleich zu einem Übermitteln der gesamten aufgenommenen Umgebungsdaten oder einer vollständigen Beschreibung der Umgebung einschließlich sämtlicher, letztlich für das erfolgreiche Ausführen von Manövern nicht relevanten Umgebungsobjekte. Dadurch ist das erfindungsgemäße Verfahren besonders zuverlässig anwendbar, da beispielsweise nicht überall mobile bzw. kabellose Datenverbindungen oder entsprechende Datennetze mit ausreichend großer Bandbreite zur Verfügung stehen. Somit können dadurch und durch das zentrale Sammeln der Datenteile in der Servereinrichtung besonders einfach und besonders zuverlässig besonders vollständige und besonders aktuelle Daten zur Verfügung stehen. Da das Aufnehmen und Übermitteln von Daten von einer Vielzahl entsprechend eingerichteter Kraftfahrzeuge durchgeführt werden kann, kann somit besonders einfach, effektiv und effizient in der Servereinrichtung oder durch die Servereinrichtung eine Gesamtkarte erzeugt werden, die besonders aktuell sein und eine besonders große Flächenabdeckung aufweisen kann. Eine solche Gesamtarte kann dann als Datengrundlage für automatisierte Fahrzeug- oder Fahrfunktionen dienen, die damit besonders genau, zuverlässig und sicher ausgeführt werden können.

Die Servereinrichtung kann die Daten, also die extrahierten Datenteile und die zugehörigen Objektdaten, also insbesondere von einer Fahrzeugflotte, das heißt von einer Vielzahl entsprechender Kraftfahrzeuge, sammeln oder aggregieren und zu der Gesamtkarte kombinieren oder fusionieren. Eine solche Gesamtkarte kann dann mehr oder andere Daten enthalten als jedes einzelne der Flottenfahrzeuge, also der an dem Verfahren beteiligten oder für das Verfahren eingerichteten Kraftfahrzeuge, individuell aufgenommen oder gesendet hat. Bei der Gesamtkarte kann es sich insbesondere um eine 3D-Karte zumindest eines oder mehrerer Parkräume handeln. Dazu können in die Karte einzutragende 3D-Objekte automatisch heuristisch rekonstruiert werden, beispielsweise wenn es sich bei den gesendeten Datenteilen um 2D-Daten handelt, insbesondere wenn diese die semantischen und/oder geometrischen Objekte aus unterschiedlichen Blickwinkeln abbilden oder charakterisieren.

Die erzeugte oder jeweils aktualisierte Gesamtkarte oder jeweils abhängig von einer jeweiligen Fahrzeugposition eines Kraftfahrzeugs für dieses Kraftfahrzeug relevante lokale Ausschnitte der Gesamtkarte können von der Servereinrichtung an das jeweilige Kraftfahrzeug gesendet werden. Dies kann beispielsweise auf eine entsprechende Anfrage des Kraftfahrzeugs hin erfolgen. Ebenso kann die Servereinrichtung die Gesamtkarte ganz oder teilweise für einen Abruf durch ein Kraftfahrzeug oder die Kraftfahrzeuge bzw. deren Datenverarbeitungs- oder Assistenzeinrichtung verfügbar machen.

Das Kraftfahrzeug kann die Gesamtkarte oder die jeweils benötigten lokalen Ausschnitte der Gesamtkarte für die Ausführung der zumindest teilautomatisierten Fahrzeug- oder Fahrfunktionen, beispielsweise ein zumindest teilautomatisiertes Navigieren oder Manövrieren in dem Parkraum, verwenden.

Bei dem genannten Kraftfahrzeug bzw. den an dem Verfahren beteiligten oder für das Verfahren eingerichteten Kraftfahrzeugen kann es sich beispielsweise um PKW, oder LKWs aber ebenso beispielsweise um Luftfahrzeuge - für die beispielsweise ein Parkraum auf einem Flughafengelände relevant sein kann - handeln.

In einer möglichen Ausgestaltung der vorliegenden Erfindung werden jeweils die semantischen und/oder geometrischen Objekte in den Umgebungsdaten erkannt und/oder die korrespondierenden Datenteile auch extrahiert unter Nutzung von vorgegebenem Vorwissen über - insbesondere für Parkmanöver und/oder in Parkräumen allgemein oder spezifisch für den jeweiligen individuellen Parkraum - relevante Karteninhalte. Ein solches Vorwissen kann vorgegeben sein, beispielsweise in Form einer Liste mit relevanten, zu erwartenden und/oder zu überprüfenden Objekten und/oder dergleichen mehr. Damit kann effektiv eine Begrenzung oder Beschränkung eines Such-, Ziel- oder Ergebnisraums der Objekterkennung erreicht werden, was wiederum eine eindeutige, korrekte und zuverlässige Objekterkennung vereinfachen kann. Ebenso kann beispielsweise Vorwissen über Objektgrößen und/oder Objektformen oder dergleichen vorgegeben sein. Dies kann ein besonders einfaches oder effizientes Extrahieren entsprechender Datenteile zu einem erkannten Objekt aus den Umgebungsdaten ermöglichen. Damit kann beispielsweise besonders zuverlässig erreicht werden, dass ein bestimmtes Objekt in den gesendeten Datenteilen je nach Implementierung oder Anforderungen vollständig oder nur in tatsächlich relevanten Teilen enthalten oder abgebildet ist, beispielsweise auch dann, wenn die Erkennung unvollständig war oder das Objekt nur unvollständig erfasst wurde, etwa durch eine Verdeckung, eine Sensorbeeinträchtigung oder dergleichen.

Gibt das Vorwissen beispielsweise eine grundlegende Struktur des Parkraums und/oder Positionen bestimmter semantischer und/oder geometrischen Objekte, beispielsweise gemäß bereits in der Vergangenheit erfassten Umgebungsdaten oder gemäß einer Bauplanung oder dergleichen, an, so können relevante Bereiche oder Objekte gezielt aufgenommen und somit besonders zuverlässig erfasst werden. Dazu kann beispielsweise die Umgebungssensorik auf entsprechende Bereiche, Positionen oder Objekte ausgerichtet werden. Ebenso kann beispielsweise die Umgebungssensorik für eine besonders genaue oder zuverlässige Erfassung oder Erkennung entsprechender Bereiche, Positionen oder Objekte eingestellt oder betrieben werden, beispielsweise durch eine entsprechend Anpassung einer Aufnahmecharakteristik, einer Fokussierung, eines oder mehrerer Betriebsparameter, eine erhöhte Aufnahmedauer oder Aufnahmefrequenz und/oder dergleichen mehr. Dies kann letztlich zu einer besonders genauen und zuverlässigen Kartierung des Parkraums führen oder beitragen.

In einer weiteren möglichen Ausgestaltung der vorliegenden Erfindung wird eine von dem Kraftfahrzeug in dem Parkraum tatsächlich befahrene Trajektorie bestimmt oder erfasst und ebenfalls an die Servereinrichtung gesendet. Die tatsächlich befahrene Trajektorie kann beispielsweise relativ zu einem oder mehreren erkannten Umgebungsobjekten und/oder relativ zu einem weltfesten Koordinatensystem bestimmt oder spezifiziert sein. Die tatsächlich befahrene Trajektorie kann - unabhängig von einer potenziell fehlerbehafteten sensorbasierten Umgebungserkennung - zuverlässige Daten über befahrbare Bereiche oder Wege sowie Daten bezüglich einer Perspektive der Umgebungssensorik auf die erkannten semantischen und/oder geometrischen Objekte bieten. Dies kann eine genauere und zuverlässigere Einordnung der gesendeten Daten sowie eine Absicherung oder Plausibilisierung der darauf basierend erstellten Gesamtkarte ermöglichen. Die tatsächlich befahrene Trajektorie kann beispielsweise unter Verwendung eines globalen Navigationssatellitensystems zur Positionsbestimmung, basierend auf einer Eigenodometrie des Kraftfahrzeugs, einer Koppelnavigation ausgehend von einem Referenzpunkt und/oder dergleichen mehr bestimmt werden.

In einer weiteren möglichen Ausgestaltung der vorliegenden Erfindung werden die Umgebungsdaten zu Zeitpunkten aufgenommen, die nach einem vorgegebenen Kriterium oder Schema bestimmten sind oder werden. Insbesondere können die Umgebungsdaten nur zu derartigen Zeitpunkten aufgenommen werden. Eine solche beschränkte oder strategisch bestimmte Aufnahme der Umgebungsdaten kann ein an die Servereinrichtung zu sendendes Datenvolumen reduzieren oder begrenzen und/oder zu einer besonders genauen und zuverlässigen Erfassung der Umgebung oder einzelner Teile oder Objekte der Umgebung bzw. des jeweiligen Parkraums führen oder beitragen. Dadurch kann letztlich das Verfahren besonders effizient und/oder besonders effektiv durchgeführt werden. Das Kriterium kann beispielsweise fest vorgegeben oder dynamisch anpassbar sein, beispielsweise abhängig von Eigenschaften des jeweiligen Parkraums, einer Geschwindigkeit des Kraftfahrzeugs, jeweiligen Umgebungs- oder Aufnahmebedingungen und/oder dergleichen mehr.

In einer möglichen Weiterbildung der vorliegenden Erfindung ist durch das vorgegebene Kriterium eine vorgegebene Wegstrecke definiert, nach deren Zurücklegen durch das Kraftfahrzeug jeweils neue Umgebungsdaten aufgenommen werden. Mit anderen Worten ist hier also ein wegstreckenbasiertes Kriterium vorgegeben. Demgemäß können also Umgebungsdaten jeweils dann aufgenommen werden, wenn das Kraftfahrzeug sich um X Meter von derjenigen Position bzw. seit demjenigen Zeitpunkt bewegt hat, an der bzw. zu dem zuletzt Umgebungsdaten aufgenommen wurden. Dabei kann X eine, beispielsweise je nach gegebenen Anforderungen, vorgegebene Zahl sein. Beispielsweise kann vorgegeben sein, dass jeweils neue Umgebungsdaten, also beispielsweise ein neues Kamerabild, ein neuer Lidar- oder Radardatensatz oder dergleichen, aufgenommen wird, wenn das Kraftfahrzeug 0,5 m zurückgelegt, sich also um 0,5 m fortbewegt hat. Dadurch kann ein Redundanzgrad der aufgenommenen Umgebungsdaten reduziert und somit ein entsprechender Datenübermittlungs- und/oder Datenverarbeitungsaufwand zur Erhöhung der Effizienz des Verfahrens reduziert werden.

In einer möglichen Weiterbildung der vorliegenden Erfindung wird durch das vorgegebene Kriterium eine vorgegebene Veränderung oder Mindestveränderung eines Aufnahmewinkels der Umgebungssensorik auf die oder bezüglich der Umgebung, insbesondere bezüglich eines jeweiligen semantischen und/oder geometrischen Objekts in der Umgebung, definiert, nach deren Erreichen, insbesondere erst nach deren Erreichen, neue Umgebungsdaten aufgenommen werden. Mit anderen Worten ist hier also ein winkel- oder betrachtungsrichtungsbasiertes Kriterium vorgegeben. Demgemäß können jeweils neue Umgebungsdaten dann, insbesondere nur oder erst dann, aufgenommen bzw. das jeweilige Objekt jeweils neu erfasst, aufgenommen oder abgebildet werden, wenn oder sobald sich ein Aufnahme- oder Betrachtungswinkel der Umgebungssensorik auf die Umgebung oder das jeweilige Objekt um wenigstens die vorgegebene Veränderung verändert hat. Der Aufnahme- oder Betrachtungswinkel bzw. dessen Veränderung kann beispielsweise relativ zu dem jeweiligen Objekt und/oder relativ zu einem weltfesten Koordinatensystem vorgegeben, definiert und/oder gemessen oder bestimmt sein. Dadurch kann sichergestellt werden, dass jeweils neue aufgenommene Umgebungsdaten einen zusätzlichen Informationsgehalt gegenüber den zuletzt aufgenommenen Umgebungsdaten aufweisen. Dadurch kann eine Verarbeitung und Übermittlung redundanter, also gleicher oder identischer Umgebungsdaten vermieden oder reduziert und dennoch letztlich die Gesamtkarte besonders genau, detailreich und zuverlässig erzeugt werden. Auch durch die hier vorgeschlagene Ausgestaltung der vorliegenden Erfindung kann somit die Effizienz und Effektivität des erfindungsgemäßen Verfahrens weiter verbessert werden.

In einer weiteren möglichen Ausgestaltung der vorliegenden Erfindung werden zu den semantischen und/oder geometrischen Objekten und/oder zu den korrespondierenden extrahierten Datenteilen Unsicherheitsdaten, die eine - zumindest abgeschätzte - jeweilige Verlässlichkeit angeben, bestimmt und berücksichtigt. Dies kann beispielsweise bedeuten, dass die Unsicherheitsdaten ebenfalls an die Servereinrichtung gesendet werden. Die Servereinrichtung kann dann die empfangenen Umgebungs- und Objektdaten unter Berücksichtigung der Unsicherheitsdaten bzw. der durch diese angegebenen Unsicherheiten zu der Gesamtkarte verarbeiten oder in die Gesamtkarte einpflegen. Ebenso können die Unsicherheitsdaten bereits in dem jeweiligen Kraftfahrzeug, beispielsweise durch dessen Datenverarbeitungs- oder Assistenzeinrichtung, berücksichtigt werden. Beispielsweise kann anhand der Unsicherheitsdaten sowie einem dafür vorgegebenen Schwellenwert automatisch entschieden werden, ob die jeweiligen Datenteile und/oder Objektdaten überhaupt an die Servereinrichtung gesendet werden. Dadurch kann vermieden werden, dass letztendlich mit einer zu großen Unsicherheit, also einer zu geringen Konfidenz behaftete Umgebungsdaten in die Gesamtkarte einfließen. Dadurch kann die Verlässlichkeit der Gesamtkarte und damit letztlich auch eine Sicherheit bei der darauf basierenden Ausführung automatisierter Fahrzeug- oder Fahrfunktionen verbessert werden. Zudem kann Aufwand für das Senden entsprechender Umgebungsdaten und deren Verarbeitung durch die Servereinrichtung eingespart werden, um die Effizienz des erfindungsgemäßen Verfahrens weiter zu verbessern. Ebenso können die Unsicherheitsdaten beispielsweise fahrzeugseitig bei der Erstellung einer lokalen Teilkarte berücksichtigt werden. Eine solche Erstellung einer lokalen Teilkarte durch das Kraftfahrzeug oder in dem Kraftfahrzeug ist an anderer Stelle näher beschrieben.

In einer möglichen Weiterbildung der vorliegenden Erfindung werden die Unsicherheitsdaten basierend auf jeweiligen Aufnahmebedingungen für die Umgebungsdaten bestimmt. Dazu können insbesondere eine ermittelte Güte einer Kalibrierung der Umgebungssensorik, ein ermittelter Abstand eines jeweiligen semantischen und/oder geometrischen Objekts von der Umgebungssensorik, eine ermittelte Winkellage des jeweiligen Objekts relativ zu der Umgebungssensorik und/oder jeweils aktuelle Sicht- und/oder Wetterbedingungen, durch welche die Umgebungssensorik bzw. das Aufnehmen der Umgebungsdaten durch die Umgebungssensorik beeinflusst oder beeinträchtigt werden kann, berücksichtigt werden. So können beispielsweise eine geringere Kalibrierungsgüte, ein größerer Abstand oder eine Positionen des jeweiligen Objekts außerhalb eines vorgegebenen oder definierten Kernerfassungsbereichs der Umgebungssensorik, in dem eine maximale Genauigkeit, Zuverlässigkeit oder Auflösung gegeben ist, eine geringere Umgebungshelligkeit, eine direkte Einstrahlung von Sonnenlicht in die Umgebungssensorik, ein Vorliegen von Nebel, Starkregen oder Schneefall und/oder dergleichen mehr zu einer entsprechend größeren Unsicherheit führen. Auf diese Weise kann die Verlässlichkeit der extrahierten Datenteile und/oder der erkannten Objekte, also der entsprechenden Objektdaten, einfach, genau und zuverlässig bestimmt werden.

In einer möglichen Weiterbildung der vorliegenden Erfindung werden die Unsicherheitsdaten basierend auf Odometriedaten, die eine Eigenbewegung des Kraftfahrzeugs charakterisieren, und/oder basierend auf einer ermittelten oder durchgeführten Bewertung solcher Odometriedaten bestimmt. So kann beispielsweise eine größere Unsicherheit bestimmt werden, wenn eine Fahr- oder Bewegungsgeschwindigkeit und/oder eine Gierrate des Kraftfahrzeugs größer ist oder oberhalb eines jeweiligen vorgegebenen Schwellenwertes liegt. Dadurch kann berücksichtigt werden, dass bei entsprechend hohen Geschwindigkeiten und/oder Gierraten beispielsweise eine Bewegungsunschärfe oder eine reduzierte Schärfe oder Detailauflösung der aufgenommenen Umgebungsdaten resultieren kann. Somit kann auch die hier vorgeschlagene Ausgestaltung der vorliegenden Erfindung zu einer besonders genauen und zuverlässigen Bestimmung der Unsicherheitsdaten beitragen.

Durch das Berücksichtigen der Unsicherheitsdaten können, beispielsweise bei Verfügbarkeit mehrerer Sätze von Umgebungsdaten für denselben Parkraum, jeweils diejenigen Umgebungsdaten, welche die kleinere Unsicherheit aufweisen, zum Erzeugen der Gesamtkarte verwendet werden. Ebenso kann beispielsweise für Teile oder Ausschnitte der Gesamtkarte, also entsprechende Bereiche, für die nur Umgebungsdaten mit einer oberhalb eines vorgegebenen Schwellenwertes liegenden Unsicherheit vorliegen oder zugrundeliegen, eine entsprechende Warnung oder ein entsprechender Hinweis vorgesehen sein. Dies kann dann beispielsweise von einem Kraftfahrzeug in einem zumindest teilweise automatisierten Betrieb berücksichtigt werden, etwa indem automatisch eine erhöhte Aufmerksamkeit eines Fahrers oder eine Übernahme der Kontrolle oder Steuerung des Kraftfahrzeugs durch den Fahrer angefordert wird.

In einer weiteren möglichen Ausgestaltung der vorliegenden Erfindung wird fahrzeugseitig, also etwa durch die genannte zur Ausführung des Verfahrens eingerichtete Datenverarbeitungs- oder Assistenzeinrichtung des Kraftfahrzeugs, basierend auf den aufgenommenen Umgebungsdaten, insbesondere nur anhand der extrahierten Datenteile und der darin erkannten semantischen und/oder geometrischen Objekte bzw. der entsprechenden Objektdaten, eine lokale Teilkarte erzeugt. In dieser lokalen Teilkarte können die als relevant eingestuften Objekte eingetragen, also gebündelt und relativ zueinander und/oder zu Umgebung bzw. einem vorgegebenen, beispielsweise weltfesten, Koordinatensystem in Beziehung gesetzt, sein. Ebenso können in der Teilkarte gegebenenfalls weitere verfügbare Daten, wie etwa die genannten Unsicherheitsdaten, Zeitstempel der Umgebungsdaten und/oder dergleichen mehr, eingetragen oder berücksichtigt sein. Die lokale Teilkarte wird dann an die Servereinrichtung gesendet. Die Teilkarte kann zusätzlich zu den extrahierten Datenteilen und den zugehörigen Objektdaten an die Servereinrichtung gesendet werden. Ebenso können die extrahierten Datenteile und die zugehörigen Objektdaten als Teil der Teilkarte an die Servereinrichtung gesendet werden oder in der Teilkarte verarbeitet sein und in diesem Sinne durch Senden der Teilkarte zumindest implizit an die Servereinrichtung gesendet werden. Die Teilkarte kann - ebenso wie die durch die Servereinrichtung erzeugte oder erzeugbare Gesamtkarte - insbesondere eine 3D-Karte sein. Dazu können entsprechende 3D-Umgebungsdaten aufgenommen und verarbeitet oder aus den aufgenommenen Umgebungsdaten heuristisch die darin erkannten Objekte als 3D-Objekte rekonstruiert werden.

Durch das fahrzeugseitige Erzeugen und Senden der Teilkarte an die Servereinrichtung kann die Gesamtkarte durch die Servereinrichtung durch Zusammensetzten mehrerer solcher gesendeter bzw. empfangender Teilkarten besonders einfach und schnell erzeugt werden. Zudem kann die fahrzeugseitig erzeugte lokale Teilkarte besonders zeitnah, insbesondere noch während derselben Fahrt, von dem Kraftfahrzeug zur Navigation oder zum Manövrieren in dem jeweiligen Parkraum verwendet werden. So kann beispielsweise die Teilkarte bei einem Einfahren in den Parkraum und einem Durchfahren des Parkraums zu einer bestimmten Abstellfläche erzeugt und nach Ende eines dortigen Parkaufenthalts zum Navigieren oder Manövrieren in entgegengesetzter Richtung aus dem Parkraum heraus verwendet werden, insbesondere auch dann, wenn zwischenzeitlich kein Kontakt zu der Servereinrichtung möglich war oder beispielsweise nicht genug Bandbreite einer Datenverbindung verfügbar war, um eine entsprechend aktualisierte Karte des Parkraums von der Servereinrichtung abzurufen.

In einer möglichen Weiterbildung der vorliegenden Erfindung werden fahrzeugseitig, also in dem Kraftfahrzeug, durch das Kraftfahrzeug oder durch eine Einrichtung des Kraftfahrzeugs, Odometriedaten erfasst, die eine Eigenbewegung des Kraftfahrzeugs angeben oder charakterisieren. Die erkannten semantischen und/oder geometrischen Objekte werden dann unter Verwendung der Odometriedaten in die Teilkarte eingetragen. Mit anderen Worten können die Odometriedaten, die eine jeweilige Position des Kraftfahrzeugs zu einem Aufnahmezeitpunkt der Umgebungsdaten definieren können, für eine Verortung oder relative Positionierung der Objekte in der Teilkarte, beispielsweise bezüglich eines lokalen oder weltfesten Koordinatensystems, verwendet werden. Die Odometriedaten können somit also eine Referenz und/oder zusätzliche Absicherung für den räumlichen Aufbau der teilen Karte darstellen oder bilden. Damit müssen die Positionen oder relativen Lagebeziehungen der Objekte also nicht ausschließlich anhand der Umgebungsdaten ermittelt werden. Dies kann eine besonders genaue und zuverlässige Erzeugung der Teilkarte ermöglichen - analog zu der serverseitigen Erzeugung der Gesamtkarte unter Verwendung oder Berücksichtigung der wie an anderer Stelle beschrieben von dem Kraftfahrzeug an die Servereinrichtung gesendeten Trajektorie des Kraftfahrzeugs.

Ein weiterer Aspekt der vorliegenden Erfindung ist ein Verfahren zum Unterstützen einer Umsetzung zumindest teilautomatisierter Fahrzeug- oder Fahrfunktionen eines Kraftfahrzeugs in einem Parkraum durch eine zentrale Servereinrichtung. Durch diese zentrale Servereinrichtung werden wie im Zusammenhang mit dem anderen erfindungsgemäßen Verfahren beschrieben an die Servereinrichtung gesendete Daten, also Datenteile von fahrzeugseitig aufgenommenen Umgebungsdaten und korrespondierende Objektdaten, die darin erkannte semantische und/oder geometrische Objekte angeben oder beschreiben, erfasst, die von einer Vielzahl von Kraftfahrzeugen stammen. Anhand dieser erfassten Daten wird dann durch die zentrale Servereinrichtung eine, insbesondere dreidimensionale, Gesamtkarte erzeugt und/oder aktualisiert. Dazu können die von unterschiedlichen Kraftfahrzeugen und/oder zu unterschiedlichen Zeitpunkten durch die Servereinrichtung erfassten Daten miteinander und/oder mit einer bestehenden oder bisherigen Gesamtkarte kombiniert oder fusioniert werden, beispielsweise unter Anwendung eines Bündelausgleichverfahrens. Durch die Servereinrichtung wird die so erzeugte oder aktualisierte Gesamtkarte den Kraftfahrzeugen bereitgestellt, also ganz oder teilweise an die Kraftfahrzeuge gesendet oder für einen Abruf durch die Kraftfahrzeuge verfügbar gemacht. Die zentrale Servereinrichtung, durch die das hier vorgeschlagene serverseitige Verfahren, insbesondere automatisch oder teilautomatisch, durchgeführt wird oder durchgeführt werden kann, kann insbesondere die im Zusammenhang mit dem anderen, fahrzeugseitig ausgeführten oder ausführbaren erfindungsgemäßen Verfahren genannte Servereinrichtung sein oder dieser entsprechen.

Eine solche Servereinrichtung kann ihrerseits ein weitere Aspekt der vorliegenden Erfindung sein. Diese erfindungsgemäße Servereinrichtung kann also zur Durchführung des entsprechenden serverseitig auszuführenden oder ausführbaren erfindungsgemäßen Verfahrens eingerichtet sein. Dazu kann die Servereinrichtung eine Schnittstelle zum Erfassen oder Empfangen von von Kraftfahrzeugen gesendeten Daten, einen computerlesbaren Datenspeicher sowie eine Prozessoreinrichtung, also etwa wenigstens einen Mikrochip, Mikroprozessor oder Mikrocontroller, aufweisen. Die Schnittstelle kann ebenso zum Ausgeben oder Bereitstellen einer mittels der Prozessoreinrichtung und des Datenspeichers erzeugten Gesamtkarte dienen oder eingerichtet sein oder die Servereinrichtung kann eine entsprechende Ausgangs- oder Ausgabeschnittstelle aufweisen. In dem computerlesbaren Datenspeicher kann ein Betriebs- oder Computerprogramm gespeichert sein, das die Verfahrensschritte des entsprechenden erfindungsgemäßen Verfahrens oder entsprechende Steueranweisungen codiert oder implementiert und durch die Prozessoreinrichtung ausführbar ist, um die Ausführung des entsprechenden Verfahrens zu bewirken oder zu veranlassen.

Ein weiterer Aspekt der vorliegenden Erfindung ist eine Assistenzeinrichtung für ein Kraftfahrzeug. Die erfindungsgemäße Assistenzeinrichtung weist eine Eingangsschnittstelle zum Erfassen von Umgebungsdaten, die etwa mittels einer Umgebungssensorik aufgenommen sein können, einen computerlesbaren Datenspeicher, eine damit gekoppelte Prozessoreinrichtung, also etwa einen Mikrochip, Mikroprozessor oder Mikrocontroller, und eine Ausgangsschnittstelle zum Ausgeben von anhand der Umgebungsdaten erzeugten Ergebnisdaten auf. Die erfindungsgemäße Assistenzeinrichtung ist dabei zum, insbesondere automatischen oder teilautomatischen, Ausführen des fahrzeugseitig auszuführenden oder ausführbaren erfindungsgemäßen Verfahrens eingerichtet. Die erfindungsgemäße Assistenzeinrichtung kann dementsprechend insbesondere die im Zusammenhang mit diesem Verfahren genannte Datenverarbeitungs- oder Assistenzeinrichtung sein oder dieser entsprechen. Die Ergebnisdaten können dementsprechend insbesondere die extrahierten Datenteile sowie die korrespondierenden Objektdaten sein oder umfassen. Ebenso können die Ergebnisdaten beispielsweise die an anderer Stelle genannte lokale Teilkarte, die an anderer Stelle genannten Sicherheitsdaten und/oder dergleichen mehr umfassen. Die erfindungsgemäße Assistenzeinrichtung kann einige oder alle der im Zusammenhang mit den übrigen Aspekt der vorliegenden Erfindung genannten Eigenschaften und/oder Merkmale aufweisen und/oder für einige oder alle der im Zusammenhang mit dem erfindungsgemäßen Verfahren genannten Verfahrensschritte, Maßnahmen oder Abläufe eingerichtet sein.

Ein weiterer Aspekt der vorliegenden Erfindung ist ein Kraftfahrzeug, das eine Umgebungssensorik, eine erfindungsgemäße Assistenzeinrichtung und ein Kommunikationsmodul zum, insbesondere kabel- oder leitungslosen, Senden von Daten an eine Servereinrichtung aufweist. Das Kommunikationsmodul kann dabei Teil der Assistenzeinrichtung oder eine von dieser separate Einrichtung sein. Das erfindungsgemäße Kraftfahrzeug kann insbesondere das im Zusammenhang mit den übrigen Aspekten der vorliegenden Erfindung genannte Kraftfahrzeug sein oder diesem entsprechen. Dementsprechend kann das erfindungsgemäße Kraftfahrzeug einige oder alle der in diesen Zusammenhängen genannten Eigenschaften und/oder Merkmale aufweisen und/oder für dort genannte Verfahrensschritte, Maßnahmen oder Abläufe eingerichtet sein.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Übersichtsdarstellung zur Veranschaulichung einer automatisierten Unterstützung zumindest teilautomatisierter Fahrzeugfunktionen.

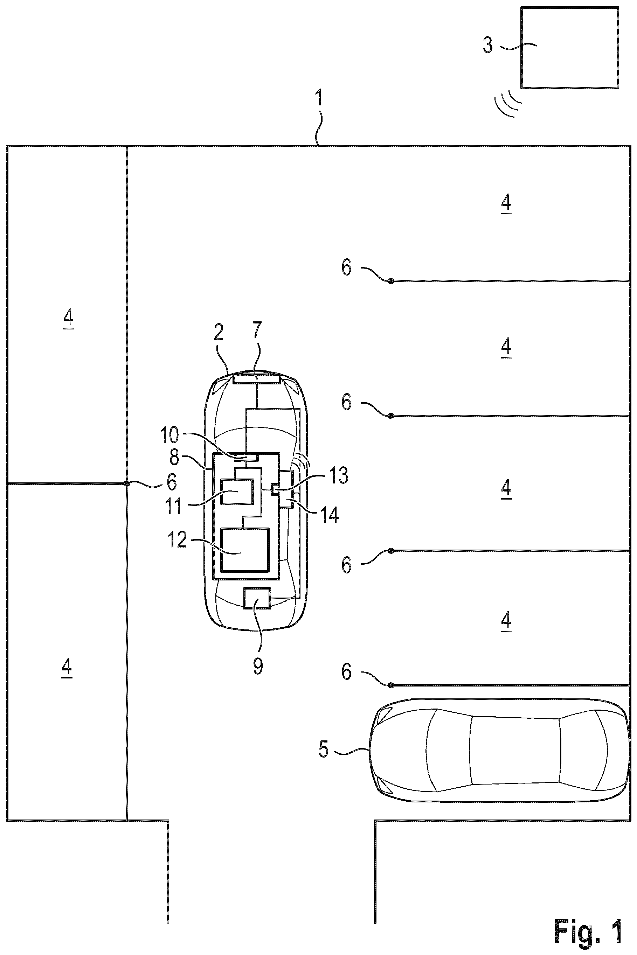

Fig. 1 zeigt eine schematische Übersichtsdarstellung mit einem Parkraum 1, auf oder in dem sich ein Kraftfahrzeug 2 bewegt, und einer externen Servereinrichtung 3. Der Parkraum 1 umfasst mehrere Parkflächen 4, auf denen jeweils ein Fahrzeug, beispielsweise das Kraftfahrzeug 2, abgestellt werden kann. Beispielhaft ist hier eine der Parkflächen 4 durch ein Fremdfahrzeug 5 belegt. Die Parkflächen 4 sind durch Parkflächenmarkierungen definiert oder abgegrenzt. Zudem sind hier beispielhaft Lokalisierungsmarker 6 vorgesehen, die eine automatisierte Erkennung der Parkflächen 4 unterstützen können.

Das Kraftfahrzeug 2 weist eine Umgebungssensorik 7 zum Aufnehmen von Umgebungsdaten, die eine jeweils aktuelle Umgebung, hier also insbesondere den Parkraum 1, abbilden oder charakterisieren, auf. Weiter weist das Kraftfahrzeug 2 eine Assistenzeinrichtung 8 und eine Fahrzeugeinrichtung 9 auf. Die Fahrzeugeinrichtung 9 kann beispielsweise durch die Assistenzeinrichtung 8 oder ein hier nicht dargestelltes weiteres Assistenzsystem des Kraftfahrzeugs 2 für einen automatisierten oder teilautomatisierten Betrieb des Kraftfahrzeugs 2 angesteuert werden. Ebenso kann die Fahrzeugeinrichtung 9 ein solches Assistenzsystem sein oder umfassen.

Die Umgebungssensorik 7, die Assistenzeinrichtung 8 und die Fahrzeugeinrichtung 9 sind hier schematisch angedeutet durch ein zur Signal- oder Datenübertragung eingerichtetes Bordnetz des Kraftfahrzeugs 2 miteinander gekoppelt bzw. an ein solches Bordnetz angeschlossen.

Die Assistenzeinrichtung 8 weist eine Eingangsschnittstelle 10 auf, über welche sie von der Umgebungssensorik 7 aufgenommene Umgebungsdaten erfassen kann. Dabei kann es sich um Rohdaten oder um vorverarbeitete Daten handeln. Weiter weist die Assistenzeinrichtung 8 hier schematisch angedeutet einen Prozessor 11, einen Datenspeicher 12 und eine Ausgangsschnittstelle 13 auf, die miteinander verbunden sein können. Mittels des Prozessors 11 und des Datenspeichers 12 können die über die Eingangsschnittstelle 10 erfassten Umgebungsdaten verarbeitet werden, woraus entsprechende Ergebnisdaten resultieren können. Diese Ergebnisdaten können dann über die Ausgangsschnittstelle 13 ausgegeben werden. Beispielsweise können die Ergebnisdaten über die Ausgangsschnittstelle 13 an ein Kommunikationsmodul 14 ausgegeben werden. Dieses Kommunikationsmodul 14 kann die Ergebnisdaten dann an die Servereinrichtung 3 senden. Das Kommunikationsmodul 14 kann über die Ausgangsschnittstelle 13 mit der Assistenzeinrichtung 8 gekoppelt aber ebenso Teil der Assistenzeinrichtung 8 sein. Die Assistenzeinrichtung 8 bzw. das Kommunikationsmodul 14 kann insbesondere für eine bidirektionale Kommunikation, also auch zum Empfangen von Daten von der Servereinrichtung 3, eingerichtet sein.

Mittels des Kraftfahrzeugs 2 und der Servereinrichtung 3 kann hier ein Verfahren zum Unterstützen zumindest teilautomatisierten Fahrzeug- oder Fahrfunktionen des Kraftfahrzeugs 2 und/oder weiterer, hier nicht dargestellter Fahrzeuge implementiert oder angewendet werden.

Eine grundlegende Idee des Verfahrens besteht darin, eine Karte inkrementell auf Basis von Flottendaten zu lernen oder zu erzeugen. Die Flottendaten können dabei Teile der von Flottenfahrzeugen, hier beispielsweise von dem Kraftfahrzeug 2, aufgenommenen Umgebungsdaten und zugehörige Objektdaten, die durch die jeweilige Assistenzeinrichtung 8 darin erkannte semantische und/oder geometrischen Objekte bezeichnen, umfassen. Derartige semantische und/oder geometrischen Objekte können hier beispielsweise die Parkflächenmarkierungen oder Parkflächenbegrenzungen der Parkflächen 4, die Lokalisierungsmarker 6, Wände oder Begrenzungen des Parkraums 1 und/oder dergleichen mehr sein oder umfassen. Die Flottenfahrzeuge, hier repräsentiert durch das Kraftfahrzeug 2, können also den Parkraum 1 bzw. weitere hier nicht dargestellte Parkräume 1 befahren und dabei mittels ihrer Umgebungssensorik 7 ihrer Umgebung wahrnehmen oder aufnehmen und entsprechende Umgebungsdaten auswerten oder vorverarbeiteten, um als für Parkmanöver relevant eingestufte semantischen und/oder geometrischen Objekte zu erkennen. Die Servereinrichtung 3 empfängt entsprechende Flottendaten und akkumuliert oder aggregiert diese zu einer globalen Karte.

Das Kraftfahrzeug 2 kann hier anhand der aufgenommenen Umgebungsdaten, beispielsweise Kamerabildern, relevante Merkmale, wie beispielsweise Bildpunkte oder Bereiche, welche zu relevanten semantischen und/oder geometrischen Objekten, wie beispielsweise den Parkflächenmarkierungen oder den Lokalisierungsmarkern 6, gehören, aus den Umgebungsdaten extrahieren. Das Kraftfahrzeug 2 bzw. die Assistenzeinrichtung 8 kann diese Merkmale oder Datenteile zusammen mit Informationen, zu welchem semantischen und/oder geometrischen Objekt diese Merkmale oder Datenteile gehören, also entsprechenden Objektdaten, zwischenspeichern. Die Objektdaten können beispielsweise angeben, dass bestimmte Merkmale oder Datenteile zu einer bestimmten Parkflächenmarkierung oder zu einem bestimmten Lokalisierungsmarker 6 oder dergleichen gehören. Diese Daten sendet die Assistenzeinrichtung 8 bzw. des Kraftfahrzeugs 2 dann an die Servereinrichtung 3.

Die Servereinrichtung 3 kann darauf basierend eine globale 3D-Rekonstruktion mittels einem globalen Bündelausgleich durchführen und so eine globale 3D-Karte der Parkräume 1 erstellen. Durch Auswerten einer durch das Kraftfahrzeug 2 bzw. die Assistenzeinrichtung 8 durchgeführten oder erzeugten semantischen und/oder geometrischen Attributierung können in dieser globalen Karte durch die Servereinrichtung 3 relevante Objekte identifiziert und gebildet werden.

Fahrzeugseitig, hier also insbesondere durch die Assistenzeinrichtung 8, können aus den Umgebungsdaten die semantischen und/oder geometrischen Objekte unter Nutzung von, beispielsweise vorgegebenem, also etwa in dem Datenspeicher 12 hinterlegtem, Vorwissen über relevante Karteninhalte extrahiert werden.

Es können unter Verwendung von Odometriedaten bzw. einer Fahrzeugodometrie, die eine Eigenbewegung des Kraftfahrzeugs 2 beschreibt oder charakterisiert, heuristisch rekonstruierte 3D-Objekte, welche die realen Objekte in der jeweiligen Umgebung repräsentieren, in eine Karte eingetragen werden, beispielsweise durch die Assistenzeinrichtung 8 in eine lokale Teilkarte und/oder durch die Servereinrichtung 3 in die globale Karte. Die Odometriedaten können beispielsweise mittels einer inertialen Messeinheit (englisch: Inertial Measurement Unit, IMU), durch Auswerten von Tachometersignalen, Lenkwinkelsignalen und/oder dergleichen mehr des Kraftfahrzeugs 2 bestimmt werden.

Ebenso können zu den Objekten Unsicherheitsdaten oder Unsicherheitsinformationen, welche sich beispielsweise aus Wahrnehmungseigenschaften der Umgebungssensorik 7 und/oder einer Eigenbewertung der Odometrie des Kraftfahrzeugs 2 sowie möglicher weiterer Kriterien ergeben können, bestimmt werden. Diese Unsicherheitsinformationen können dann, beispielsweise beim Erstellen der lokalen Teilkarte, berücksichtigt und/oder an die Servereinrichtung 3 zur Berücksichtigung beim Erzeugen der globalen Karte gesendet werden. Die Servereinrichtung 3 kann also die Flottendaten oder Teilkarten vieler Flottenfahrzeuge unter Berücksichtigung der enthaltenen Unsicherheitsinformationen zu der globalen Karte fusionieren.

Die Flottenfahrzeuge, hier also repräsentativ das Kraftfahrzeug 2, können beispielsweise ein visuelles SLAM-Verfahren (V-SLAM, Visual Simultaneous Localization And Mapping) durchführen oder anwenden, um die jeweilige lokale Teilkarte, insbesondere als 3D-Karte, des jeweiligen Parkraums 1, zu erzeugen. Ein solches V-SLAM-Verfahren kann auf Basis visueller oder optischer Umgebungsdaten zur Rekonstruktion von 3D-Eigenschaften, insbesondere der Lage und Orientierung in drei Dimensionen, von Objekten in der jeweiligen Umgebung des Kraftfahrzeugs 2 angewendet werden. Die lokalen Teilkarten können Daten oder Informationen über relevante Elemente oder Objekte in der jeweiligen Umgebung, wie beispielsweise die Parkflächenmarkierungen, die Lokalisierungsmarker 6, Wände oder Begrenzungen des jeweiligen Parkraums 1 und/oder weitere Daten, wie beispielsweise eine von dem Kraftfahrzeug 2 in dem jeweiligen Parkraum 1 befahrene Trajektorie enthalten. Das Kraftfahrzeug 2 kann dabei bzw. zum Erkennen oder Extrahieren entsprechender relevanter Informationen, beispielsweise semantischer und/oder räumlicher Daten, etwa Verfahren oder Systeme wie visuelle Odometrie (TVIP) oder visuelle Lokalisierung nutzen.

Das Kraftfahrzeug 2 kann die Umgebungsdaten bzw. jeweils neue Umgebungsdaten zu strategisch sinnvollen Zeitpunkten aufnehmen, die beispielsweise durch ein oder mehrere vorgegebene Kriterien definiert sein können. Die Bestimmung oder Auswahl dieser Zeitpunkte kann beispielsweise wegstreckenbasiert, zeitbasiert sein und/oder auf anderen Kriterien beruhen. Beispielsweise kann jeweils nach Zurücklegen von 0,5 m seit dem jeweils zuletzt erfolgten Aufnehmen von Umgebungsdaten und/oder beispielsweise einmal oder zweimal in jeder Sekunde ein neuer Satz von Umgebungsdaten mittels der Umgebungssensorik 7 aufgenommen oder durch Assistenzeinrichtung 8 erfasst werden. Die Umgebungssensorik 7 kann eine demgegenüber größere Aufnahmehäufigkeit oder Aufnahmefrequenz aufweisen, beispielsweise wenn die durch die Umgebungssensorik 7 aufgenommenen Umgebungsdaten auch durch andere Einrichtungen oder Systeme des Kraftfahrzeugs 2 verwendet werden. Die Assistenzeinrichtung 8 kann dann zur Begrenzung eines Datenverarbeitungsaufwands nur einen Teil der tatsächlich durch die Umgebungssensorik 7 aufgenommenen Daten erfassen bzw. verarbeiten oder verwenden. Die Assistenzeinrichtung 8 kann die erfassten Umgebungsdaten zwischenspeichern oder jeweils direkt in Echtzeit verarbeiten und verwerfen, wobei dann nur entsprechende Ergebnisdaten, beispielsweise die extrahierten Datenteile und die korrespondierenden Objektdaten, beibehalten werden. Diese können dann direkt, also in Echtzeit an die Servereinrichtung 3 übermittelt oder in der Assistenzeinrichtung 8, beispielsweise in dem Datenspeicher 12, zwischengespeichert werden. In letzterem Fall können die entsprechenden Daten dann jeweils bei Gelegenheit an die Servereinrichtung 3 gesendet werden, beispielsweise in vorgegebenen regelmäßigen Zeitintervallen oder jeweils dann, wenn eine ausreichend breitbandige und stabile Datenverbindung zu der Servereinrichtung 3 zur Verfügung steht oder aufgebaut werden kann.

Insgesamt zeigen die beschriebenen Beispiele wie ein Kartenlernen oder eine Kartenerzeugung für Parkanwendungen, beispielsweise auf Basis von V-SLAM und globaler Karten- oder Datenfusion, realisiert werden kann.

### Bezugszeichenliste

- 1: Parkraum
- 2: Kraftfahrzeug
- 3: Servereinrichtung
- 4: Parkfläche
- 5: Fremdfahrzeug
- 6: Lokalisierungsmarker
- 7: Umgebungssensorik
- 8: Assistenzeinrichtung
- 9: Fahrzeugeinrichtung
- 10: Eingangsschnittstelle
- 11: Prozessor
- 12: Datenspeicher
- 13: Ausgangsschnittstelle
- 14: Kommunikationsmodul

## Patentansprüche

1. Verfahren zum Unterstützen zumindest teilautomatisierter Fahrzeugfunktionen in einem Parkraum (1), wobei automatisch
- in dem Parkraum (1) mittels einer Umgebungssensorik (7) eines Kraftfahrzeugs (2) Umgebungsdaten, die eine jeweils aktuelle Umgebung des Kraftfahrzeugs (2) charakterisieren, aufgenommen werden, und
- die Umgebungsdaten zum Erkennen semantischer und/oder geometrischer Objekte (1, 4, 5, 6) mittels einer Datenverarbeitungseinrichtung (8) des Kraftfahrzeugs (2) verarbeitet werden, wobei
- die Umgebungsdaten den Parkraum (1) abbilden oder als Punktwolke repräsentieren, **dadurch gekennzeichnet, dass**
- aus den Umgebungsdaten mittels der Datenverarbeitungseinrichtung (8) des Kraftfahrzeugs (2) Datenteile extrahiert werden, die mit als relevant für ein Parkmanöver eingestuften semantischen und/oder geometrischen Objekten (1, 4, 5, 6) korrespondieren und Bild- oder Datenpunkte umfassen, welche die erkannten semantischen und/oder geometrischen Objekte abbilden oder darstellen,
- von den Umgebungsdaten nur die extrahierten Datenteile zusammen mit Objektdaten, die als semantische und/oder geometrische Attributierung der Datenteile jeweils angeben, mit welchem wenigstens einen semantischen und/oder geometrischen Objekt (1, 4, 5, 6) die Datenteile korrespondieren, zum automatischen Erstellen einer Gesamtkarte an eine Servereinrichtung (3) gesendet werden.

2. Verfahren nach Anspruch 1,
**dadurch gekennzeichnet, dass**
als die relevanten Objekte (1, 4, 5, 6) Parkflächenmarkierungen, Fahrwegbegrenzungen und/oder Lokalisierungsmarker (6) vorgegeben sind.

3. Verfahren nach einem der vorhergehenden Ansprüche,
**dadurch gekennzeichnet, dass**
die Objekte (1, 4, 5, 6) in den Umgebungsdaten erkannt und/oder die korrespondierenden Datenteile aus den Umgebungsdaten extrahiert werden unter Nutzung von vorgegebenem Vorwissen über relevante Karteninhalte.

4. Verfahren nach einem der vorhergehenden Ansprüche,
**dadurch gekennzeichnet, dass**
eine von dem Kraftfahrzeug (2) in dem Parkraum (1) tatsächlich befahrene Trajektorie bestimmt und ebenfalls an die Servereinrichtung (3) gesendet wird.

5. Verfahren nach einem der vorhergehenden Ansprüche,
**dadurch gekennzeichnet, dass**
die Umgebungsdaten, insbesondere nur, zu nach einem vorgegebenen Kriterium bestimmten Zeitpunkten aufgenommen werden.

6. Verfahren nach Anspruch 5,
**dadurch gekennzeichnet, dass**
durch das Kriterium eine vorgegebene Wegestrecke definiert wird, nach deren Zurücklegen durch das Kraftfahrzeug (2) jeweils neue Umgebungsdaten aufgenommen werden.

7. Verfahren nach Anspruch 5 oder 6,
**dadurch gekennzeichnet, dass**
durch das Kriterium eine vorgegebene Veränderung eines Aufnahmewinkels der Umgebungssensorik (7) bezüglich der Umgebung, insbesondere bezüglich eines jeweiligen Objekts (1, 4, 5, 6) in der Umgebung, definiert wird, nach deren Erreichen neue Umgebungsdaten aufgenommen werden.

8. Verfahren nach einem der vorhergehenden Ansprüche,
**dadurch gekennzeichnet, dass**
zu den Objekten (1, 4, 5, 6) und/oder zu den korrespondierenden extrahierten Datenteilen Unsicherheitsdaten, die eine jeweilige Verlässlichkeit angeben, bestimmt und berücksichtigt werden.

9. Verfahren nach Anspruch 8,
**dadurch gekennzeichnet, dass**
die Unsicherheitsdaten basierend auf jeweiligen Aufnahmebedingungen für die Umgebungsdaten bestimmt werden, insbesondere basierend auf einer ermittelten Güte einer Kalibrierung der Umgebungssensorik (7), einem ermittelten Abstand eines jeweiligen Objekts (1, 4, 5, 6) von der Umgebungssensorik (7), einer ermittelten Winkellage des jeweiligen Objekts (1, 4, 5, 6) relativ zu der Umgebungssensorik (7) und/oder jeweils aktuellen Sicht- und/oder Wetterbedingungen.

10. Verfahren nach Anspruch 8 oder 9,
**dadurch gekennzeichnet, dass**
die Unsicherheitsdaten basierend auf Odometriedaten, die eine Eigenbewegung des Kraftfahrzeugs (2) charakterisieren, bestimmt werden.

11. Verfahren nach einem der vorhergehenden Ansprüche,
**dadurch gekennzeichnet, dass**
fahrzeugseitig basierend auf den aufgenommenen Umgebungsdaten, insbesondere nur anhand der extrahierten Datenteile und der darin erkannten Objekte (1, 4, 5, 6), eine lokale Teilkarte, in der die als relevant eingestuften Objekte (1, 4, 5, 6) eingetragen sind, erzeugt wird und die Teilkarte an die Servereinrichtung (3) gesendet wird.

12. Verfahren nach Anspruch 11,
**dadurch gekennzeichnet, dass**
fahrzeugseitig Odometriedaten erfasst werden, die eine Eigenbewegung des Kraftfahrzeugs (2) charakterisieren, und die erkannten Objekte (1, 4, 5, 6) unter Verwendung der Odometriedaten in die Teilkarte eingetragen werden.

13. Verfahren zum Unterstützen zumindest teilautomatisierter Fahrzeugfunktionen eines Kraftfahrzeugs (2) in einem Parkraum (1), in dem durch eine zentrale Servereinrichtung (3)
- gemäß einem Verfahren nach einem der vorhergehenden Ansprüche an die Servereinrichtung (3) gesendete Daten von einer Vielzahl von Kraftfahrzeugen (2) erfasst werden,
- anhand der erfassten Daten eine Gesamtkarte erzeugt und/oder aktualisiert wird, und
- die Gesamtkarte den Kraftfahrzeugen (2) bereitgestellt wird.

14. Assistenzeinrichtung (8) für ein Kraftfahrzeug (2), aufweisend, eine Eingangsschnittstelle (10) zum Erfassen von Umgebungsdaten, einen computerlesbaren Datenspeicher (12), eine damit gekoppelte Prozessoreinrichtung (11) und eine Ausgangsschnittstelle (13) zum Ausgeben von anhand der Umgebungsdaten erzeugten Ergebnisdaten, wobei die Assistenzeinrichtung (8) zum Ausführen eines Verfahrens nach einem der Ansprüche 1 bis 12 eingerichtet ist.

15. Kraftahrzeug (2), aufweisend eine Umgebungssensorik (7), eine Assistenzeinrichtung (8) nach Anspruch 14 und ein Kommunikationsmodul (14) zum Senden von Daten an eine Servereinrichtung (3) über eine kabellose Datenverbindung.

## Claims

1. Method for supporting at least partially automated vehicle functions in a parking area (1), wherein
- environmental data which characterize a current environment of the motor vehicle (2) in each case are automatically acquired in the parking area (1) by means of an environmental sensor system (7) of the motor vehicle (2), and
- the environmental data are automatically processed by means of a data processing device (8) of the motor vehicle (2) in order to detect semantic and/or geometric objects (1, 4, 5, 6), wherein
- the environmental data automatically reproduce the parking area (1) or represent the parking area as a point cloud,
**characterized in that**
- data portions are extracted from the environmental data by means of the data processing device (8) of the motor vehicle (2), which data portions correspond to semantic and/or geometric objects (1, 4, 5, 6) which are classified as relevant for a parking maneuver and which comprise image points or data points which reproduce or depict the detected semantic and/or geometric objects,
- of the environmental data, only the extracted data portions, together with object data which, as semantic and/or geometric attribution of the data portions, indicate in each case to which at least one semantic and/or geometric object (1, 4, 5, 6) the data portions correspond, are sent to a server facility (3) for automatic generation of a complete map.

2. Method according to claim 1,
**characterized in that**
parking space markings, roadway boundaries and/or localization markers (6) are specified as the relevant objects (1, 4, 5, 6).

3. Method according to any of the preceding claims,
**characterized in that**
the objects (1, 4, 5, 6) in the environmental data are detected and/or the corresponding data portions are extracted from the environmental data using predefined prior knowledge about relevant map content.

4. Method according to any of the preceding claims,
**characterized in that**
a trajectory actually traveled by the motor vehicle (2) in the parking area (1) is determined and is also sent to the server facility (3).

5. Method according to any of the preceding claims,
**characterized in that**
the environmental data are, in particular exclusively, acquired at specific times according to a specified criterion.

6. Method according to claim 5,
**characterized in that**
a specified route is defined using the criterion, after travel of which route, new environmental data are acquired by the motor vehicle (2).

7. Method according to claim 5 or 6,
**characterized in that**
a specified change of a acquiring angle of the environmental sensor system (7) with respect to the environment, in particular with respect to a relevant object (1, 4, 5, 6) in the environment, is defined using the criterion, after completion of which change, new environmental data are aquired.

8. Method according to any of the preceding claims,
**characterized in that**
uncertainty data with respect to the objects (1, 4, 5, 6) and/or the corresponding extracted data portions, which uncertainty data indicate a relevant reliability, are determined and taken into account.

9. Method according to claim 8,
**characterized in that**
the uncertainty data are determined based on respective aquiring conditions for the environmental data, in particular based on an ascertained quality of a calibration of the environmental sensor system (7), an ascertained distance of a relevant object (1, 4, 5, 6) from the environmental sensor system (7), an ascertained angular position of the relevant object (1, 4, 5, 6) relative to the environmental sensor system (7) and/or current visibility and/or weather conditions in each case.

10. Method according to claim 8 or 9,
**characterized in that**
the uncertainty data are determined based on odometry data which characterize an ego movement of the motor vehicle (2).

11. Method according to any of the preceding claims,
**characterized in that**
a local submap is generated on board on the basis of the aquired environmental data, in particular only on the basis of the extracted data portions and the objects (1, 4, 5, 6) detected therein, in which local submap the objects (1, 4, 5, 6) which are classified as relevant are entered, and the submap is sent to the server facility (3).

12. Method according to claim 11,
**characterized in that**
on-board odometry data are acquired which characterize an ego movement of the motor vehicle (2), and the detected objects (1, 4, 5, 6) are entered into the submap using the odometry data.

13. Method for supporting at least partially automated vehicle functions of a motor vehicle (2) in a parking area (1) in which a central server facility (3)
- acquires data transmitted to the server facility (3) from a plurality of motor vehicles (2) according to a method according to any of the preceding claims,
- generates and/or updates a complete map on the basis of the acquired data, and
- provides the complete map to the motor vehicles (2).

14. Assistance device (8) for a motor vehicle (2), comprising an input interface (10) for acquiring environmental data, a computer-readable data memory (12), a processor device (11) coupled thereto, and an output interface (13) for outputting result data generated on the basis of the environmental data, wherein the assistance device (8) is designed to carry out a method according to any of claims 1 to 12.

15. Motor vehicle (2) comprising an environmental sensor system (7), an assistance device (8) according to claim 14 and a communication module (14) for sending data to a server facility (3) via a wireless data connection.

## Revendications

1. Procédé permettant d'assister des fonctions de véhicule au moins partiellement automatisées dans un parc de stationnement (1), dans lequel, automatiquement,
- dans le parc de stationnement (1), au moyen d'un système de capteurs d'environnement (7) d'un véhicule automobile (2), des données d'environnement caractérisant un environnement actuel respectif du véhicule automobile (2) sont enregistrées, et
- les données d'environnement sont traitées pour la détection d'objets sémantiques et/ou géométriques (1, 4, 5, 6) au moyen d'un dispositif de traitement de données (8) du véhicule automobile (2), dans lequel
- les données d'environnement reproduisent le parc de stationnement (1) ou le représentent sous forme de nuage de points,
**caractérisé en ce que**
- des éléments de données sont extraits des données d'environnement au moyen du dispositif de traitement de données (8) du véhicule automobile (2), lesquels éléments de données correspondent à des objets sémantiques et/ou géométriques (1, 4, 5, 6) jugés pertinents pour une manœuvre de stationnement, et comprennent des points d'image ou de données reproduisant ou illustrant les objets sémantiques et/ou géométriques détectés,
- seuls les éléments de données extraits des données d'environnement conjointement avec des données d'objet qui, en tant qu'attributs sémantiques et/ou géométriques desdits éléments de données, indiquent respectivement à quel au moins un objet sémantique et/ou géométrique (1, 4, 5, 6) les éléments de données correspondent, sont envoyés à un dispositif formant serveur (3) pour la création automatique d'une carte globale.

2. Procédé selon la revendication 1,
**caractérisé en ce que**
des marquages de places de stationnement, des délimitations de trajectoire et/ou des repères de localisation (6) sont prédéfinis en tant qu'objets (1, 4, 5, 6) pertinents.

3. Procédé selon l'une des revendications précédentes,
**caractérisé en ce que**
les objets (1, 4, 5, 6) sont détectés dans les données d'environnement et/ou les éléments de données correspondants sont extraits des données d'environnement en s'appuyant sur des connaissances préalables prédéfinies concernant des contenus cartographiques pertinents.

4. Procédé selon l'une des revendications précédentes,
**caractérisé en ce que**
une trajectoire effectivement suivie par le véhicule automobile (2) dans le parc de stationnement (1) est établie et est également transmise au dispositif formant serveur (3).

5. Procédé selon l'une des revendications précédentes,
**caractérisé en ce que**
les données d'environnement sont enregistrées, en particulier uniquement à des moments établis selon un critère prédéfini.

6. Procédé selon la revendication 5,
**caractérisé en ce que**
un parcours prédéfini est défini par le critère et de nouvelles données d'environnement respectives sont enregistrées une fois celui-ci parcouru par le véhicule automobile (2).

7. Procédé selon la revendication 5 ou 6,
**caractérisé en ce que**
une variation prédéfinie d'un angle de capture du système de capteurs d'environnement (7) par rapport à l'environnement, en particulier par rapport à un objet (1, 4, 5, 6) respectif présent dans l'environnement, est définie par le critère et de nouvelles données d'environnement sont enregistrées une fois celle-ci atteinte.

8. Procédé selon l'une des revendications précédentes,
**caractérisé en ce que**
des données d'incertitude, lesquelles indiquent un niveau de fiabilité respectif, sont établies et prises en compte pour les objets (1, 4, 5, 6) et/ou pour les éléments de données extraites correspondantes.

9. Procédé selon la revendication 8,
**caractérisé en ce que**
les données d'incertitude sont établies sur la base de conditions d'enregistrement respectives des données d'environnement, en particulier sur la base d'une qualité déterminée d'un étalonnage du système de capteurs d'environnement (7), d'une distance déterminée entre un objet (1, 4, 5, 6) respectif et le système de capteurs d'environnement (7), d'une position angulaire déterminée de l'objet (1, 4, 5, 6) respectif par rapport au système de capteurs d'environnement (7) et/ou des conditions de visibilité et/ou météorologiques actuelles respectives.

10. Procédé selon la revendication 8 ou 9,
**caractérisé en ce que**
les données d'incertitude sont établies sur la base de données d'odométrie caractérisant le déplacement propre du véhicule automobile (2).

11. Procédé selon l'une des revendications précédentes,
**caractérisé en ce que**
côté véhicule, sur la base des données d'environnement enregistrées, en particulier uniquement à l'aide des éléments de données extraits et des objets (1, 4, 5, 6) qui y sont détectés, une carte partielle locale dans laquelle sont répertoriés les objets (1, 4, 5, 6) jugés pertinents est générée et la carte partielle est envoyée au dispositif formant serveur (3).

12. Procédé selon la revendication 11,
**caractérisé en ce que**
des données d'odométrie, lesquelles caractérisent un déplacement propre du véhicule automobile (2), sont saisies côté véhicule et les objets (1, 4, 5, 6) détectés sont répertoriés sur la carte partielle à l'aide des données d'odométrie.

13. Procédé permettant d'assister des fonctions de véhicule au moins partiellement automatisées d'un véhicule automobile (2) dans un parc de stationnement (1), dans lequel, grâce à un dispositif formant serveur (3) central,
- selon un procédé selon l'une des revendications précédentes, des données envoyées au dispositif formant serveur (3) par une pluralité de véhicules automobiles (2) sont saisies,
- une carte globale est générée et/ou mise à jour à l'aide des données saisies, et
- la carte globale est fournie aux véhicules automobiles (2).

14. Dispositif d'assistance (8) pour un véhicule automobile (2), présentant une interface d'entrée (10) pour la saisie de données d'environnement, une mémoire de données (12) lisible par ordinateur, un dispositif de traitement (11) couplé à celui-ci et une interface de sortie (13) pour la sortie de données de résultat générées à l'aide des données d'environnement, dans lequel le dispositif d'assistance (8) est configuré pour exécuter un procédé selon l'une des revendications 1 à 12.

15. Véhicule automobile (2), présentant un système de capteurs d'environnement (7), un dispositif d'assistance (8) selon la revendication 14 et un module de communication (14) pour l'envoi de données à un dispositif formant serveur (3) par l'intermédiaire d'une connexion de données sans fil.
